Europäisches Patentamt

European Patent Office

Office européen des brevets

(19)

(11) **EP 1 167 085 B1**

(12) **FASCICULE DE BREVET EUROPEEN**

(45) Date de publication et mention
de la délivrance du brevet:
**24.05.2006 Bulletin 2006/21**

(51) Int Cl.:
***B60C 23/04*** *(2006.01)*

(21) Numéro de dépôt: **01401645.5**

(22) Date de dépôt: **21.06.2001**

(54) **Dispositif et procédé perfectionnés de surveillance de la pression d'un pneu**

Verbesserte Vorrichtung und Verfahren zur Reifendrucküberwachung

Improved device and method for tyre pressure monitoring

(84) Etats contractants désignés:
**AT BE CH CY DE DK ES FI FR GB GR IE IT LI LU MC NL PT SE TR**

(30) Priorité: **26.06.2000 FR 0008161**

(43) Date de publication de la demande:
**02.01.2002 Bulletin 2002/01**

(73) Titulaire: **Peugeot Citroen Automobiles SA 92200 Neuilly sur Seine (FR)**

(72) Inventeur: **Bailleux, Francois 91400 Val d'Albian (FR)**

(74) Mandataire: **Bentz, Jean-Paul Cabinet Weinstein, 56 A, rue du Faubourg Saint-Honoré 75008 Paris (FR)**

(56) Documents cités:
**US-A- 5 963 128**

**Description**

La présente invention concerne, de façon générale et selon l'un de ses aspects, un dispositif permettant de surveiller en permanence la pression d'un pneu équipant une roue d'un véhicule automobile.

Plus précisément, l'invention concerne notamment un dispositif de surveillance de la pression d'un pneu équipant une roue d'un véhicule automobile, du type de ceux qui comprennent un capteur de pression embarqué sur la roue et délivrant un signal de pression représentatif de la pression du pneu, un circuit d'émission également embarqué sur la roue et transmettant un signal de surveillance lié à la pression du pneu, et un circuit de réception installé sur une partie du véhicule portée par la roue, pour recevoir le signal de surveillance.

Un tel dispositif est décrit dans le brevet US 5,963,128, par example.

Dans les dispositifs de ce type, qui sont connus et utilisés depuis quelques années, le signal de surveillance est transmis au circuit de réception, et ce dernier est conçu pour délivrer un signal d'alerte lorsque la pression du pneu s'avère insuffisante.

Pour offrir une garantie permanente de sécurité, il est donc nécessaire de transmettre le signal de surveillance au circuit de réception à une fréquence relativement élevée.

Or, comme le circuit d'émission est embarqué sur la roue et ne peut aisément être alimenté que par une pile, la fréquence élevée de transmission du signal de surveillance n'autorise qu'une autonomie relativement faible de cette pile.

Dans ce contexte, l'un des buts de la présente invention est de proposer un dispositif utilisant un transmetteur embarqué sur la roue qui, même s'il est alimenté par une pile, présente une autonomie accrue.

A cette fin, le dispositif de l'invention, par ailleurs conforme à la définition générique qu'en donne le préambule ci-dessus, est essentiellement caractérisé en ce qu'il comprend des moyens de traitement embarqués sur la roue pour rendre le signal de surveillance au moins partiellement dépendant du signal de pression et d'un signal de consigne de pression et en ce qu'il comprend en outre un capteur de rotation de la roue embarqué sur la roue et produisant un signal de rotation de roue, les moyens de traitement étant conçus pour rendre le signal de consigne de pression au moins partiellement dépendant du signal de rotation de roue.

Grâce à cette mesure, la vérification de la conformité de la pression peut être directement réalisée sur la roue, de sorte qu'il n'est plus nécessaire de transmettre le signal de surveillance à une fréquence élevée pour pouvoir procéder à cette vérification de manière permanente.

Dans un mode de réalisation préféré de l'invention, le capteur de rotation comprend par exemple un accéléromètre présentant un axe sensible faisant un angle non nul avec une direction horizontale.

Les moyens de traitement peuvent avantageusement comprendre un premier générateur de fonction délivrant, à partir du signal de rotation, un signal de consigne de pression lié au signal de rotation par une loi croissant avec la vitesse du véhicule, et un second générateur de fonction produisant, en tant que signal de surveillance, un signal lié à une différence entre le signal de pression et le signal de consigne de pression.

Dans une première variante de réalisation possible, le capteur de rotation comprend un filtre passe-haut relié à l'accéléromètre et fournissant un signal filtré sensiblement périodique.

Dans une seconde variante de réalisation possible, le capteur de rotation comprend un filtre passe-bas relié à l'accéléromètre et fournissant un signal filtré sensiblement continu.

Dans l'une et l'autre des deux variantes, le capteur de rotation peut comprendre un circuit de formatage produisant, en tant que signal de rotation de roue, un signal représentant la période, la fréquence, ou l'amplitude du signal filtré.

Le premier générateur de fonction peut quant à lui comprendre un comparateur pour produire le signal de consigne de pression en réponse à une comparaison entre le signal de rotation de roue et au moins un seuil.

En variante, le premier générateur de fonction peut comprendre une mémoire contenant au moins deux valeurs différentes du signal de consigne de pression, accessibles à des adresses différentes de la mémoire, et un circuit d'adressage utilisant le signal de rotation de roue en tant qu'adresse de lecture dans la mémoire.

Dans son mode de réalisation le plus simple, le second générateur de fonction peut produire, en tant que signal de surveillance, un signal représentant au moins le signe de la différence entre le signal de pression et le signal de consigne de pression.

Par ailleurs, il est possible de prévoir que le circuit d'émission n'émette le signal de surveillance que sous condition que la différence entre le signal de pression et le signal de consigne de pression soit négative.

En pratique, il peut être suffisant de prévoir que le signal de consigne de pression prenne une valeur choisie parmi au moins deux valeurs discrètes différentes l'une de l'autre.

L'invention concerne également un procédé de surveillance de la pression d'un pneu équipant une roue d'un véhicule automobile, ce procédé comprenant une première procédure de mesure mise en oeuvre sur la roue et consistant à délivrer un signal de pression représentatif de la pression du pneu, une opération de transmission mise en oeuvre sur la roue et consistant à émettre un signal de surveillance lié à la pression du pneu, et une opération de réception, mise en oeuvre sur une partie du véhicule portée par la roue, et consistant à recevoir le signal de surveillance, ce procédé étant essentiellement caractérisé en ce qu'il comprend une procédure de traitement mise en oeuvre sur la roue et consistant à rendre le signal de surveillance au moins partiellement dépendant du signal de pression et d'un signal de consigne de pression, et en ce qu'il comprend en outre une seconde procédure de mesure mise en oeuvre sur la roue et consistant à délivrer un signal de rotation de roue, la procédure de traitement étant mise en oeuvre pour rendre le signal de consigne de pression au moins partiellement dépendant du signal de rotation de roue.

La seconde procédure de mesure peut par exemple comprendre une opération consistant à délivrer un signal dépendant d'une accélération non nulle subie en un point de mesure de la roue.

La procédure de traitement peut quant à elle comprendre une première étape de traitement consistant à délivrer, à partir du signal de rotation, un signal de consigne de pression lié au signal de rotation par une loi croissant avec la vitesse du véhicule, et une seconde étape de traitement consistant à délivrer, en tant que signal de surveillance, un signal lié à une différence entre le signal de pression et le signal de consigne de pression.

Selon une première variante de ce procédé, la seconde procédure de mesure comprend une opération de filtrage passe-haut effectuée sur le signal dépendant de l'accélération du point de mesure, cette opération de filtrage passe-haut fournissant un signal filtré sensiblement périodique, et la première étape de traitement comprend une opération de comparaison consistant à comparer la période ou la fréquence du signal filtré sensiblement périodique à au moins une période ou une fréquence de référence.

Selon une seconde variante de ce procédé, la seconde procédure de mesure comprend une opération de filtrage passe-bas effectuée sur le signal dépendant de l'accélération du point de mesure, cette opération de filtrage passe-bas fournissant un signal filtré sensiblement continu, et la première étape de traitement comprend une opération de comparaison consistant à comparer l'amplitude du signal filtré sensiblement continu à au moins une amplitude de référence.

Dans l'une et l'autre de ces variantes, la seconde étape de traitement consiste par exemple à délivrer, en tant que signal de surveillance, un signal représentant au moins le signe de la différence entre le signal de pression et le signal de consigne de pression, l'opération de transmission n'étant effectuée que pour autant que cette différence soit négative.

D'autres caractéristiques et avantages de l'invention ressortiront clairement de la description qui en est faite ci-après, à titre indicatif et nullement limitatif, en référence aux dessins annexés, dans lesquels :

- La Figure 1 est un schéma représentant, sous forme fonctionnelle, les circuits utilisés dans le dispositif de l'invention, les fonctions réalisées par ces circuits constituant les opérations du procédé de l'invention; et
- La Figure 2 est un diagramme temporel représentant le signal de sortie d'un accéléromètre susceptible d'être utilisé dans l'invention.

L'invention, dans l'un de ses aspects, concerne un dispositif de surveillance de la pression d'un pneu équipant une roue d'un véhicule automobile.

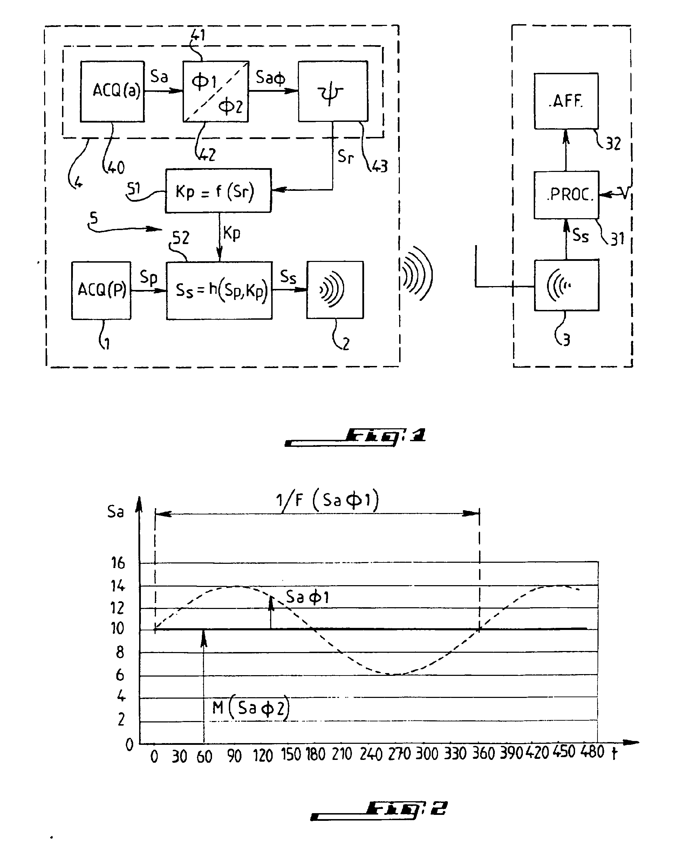

Comme le montre la figure 1, ce dispositif comprend essentiellement, de façon connue, un capteur de pression 1 embarqué sur la roue, un circuit d'émission 2 également embarqué sur la roue, et un circuit de réception 3 installé sur le châssis du véhicule ou sur toute partie portée par les roues.

Le capteur de pression 1, par exemple installé sur la valve du pneu de la roue concernée, a pour fonction de délivrer un signal de pression Sp représentatif de la pression de ce pneu, le circuit d'émission 2 ayant pour fonction de transmettre au circuit de réception 3 un signal de surveillance Ss lié à la pression du pneu.

Le dispositif de l'invention se distingue des dispositifs connus en ce qu'il comprend en outre des moyens de traitement génériquement désignés par la référence 5, embarqués sur la roue, et destinés à rendre le signal de surveillance Ss au moins partiellement dépendant du signal de pression Sp délivré par le capteur 1, et d'un signal de consigne de pression prédéterminé Kp.

Dans son mode de réalisation préféré, ce dispositif comprend en outre un capteur de rotation de roue, génériquement désigné par la référence 4, lui aussi embarqué sur la roue, et propre à produire un signal de rotation de roue Sr, les moyens de traitement 5 étant alors conçus pour rendre le signal de consigne de pression Kp au moins partiellement dépendant du signal de rotation de roue Sr.

Par exemple, le capteur de rotation 4 comprend un accéléromètre 40 tournant avec la roue et présentant un axe sensible disposé dans un plan vertical.

Si l'on considère que le véhicule, à un instant donné, roule à vitesse constante, et si l'on pose par convention que:

"k" désigne la constante d'amplification de cet accéléromètre 40;
"g" désigne l'accélération de la pesanteur;
"R" désigne le rayon de la roue;
"r" désigne le rayon de la trajectoire circulaire de l'accéléromètre autour de l'axe de la roue;

"V" la vitesse linéaire de la périphérie de la roue;

"v" la vitesse tangentielle de l'accéléromètre;

"t" la variable temps; et

"Ao" l'angle de phase représentant la position angulaire initiale de l'accéléromètre par rapport à l'horizontale;

alors le signal de sortie Sa de l'accéléromètre 40 est donné par la relation

$$Sa = k * [(v^2 / r) + g * \sin ((v / r) * t + Ao]$$

Comme le montre la figure 2, le signal Sa comprend donc, pour une vitesse stabilisée V du véhicule, une composante périodique Sa$\phi$1 dont la fréquence F(Sa$\phi$1) est donnée par l'une quelconque des relations :

$$F(Sa\phi1) = v / (2\pi * r) \quad et \quad F(Sa\phi1) = V / (2\pi * R),$$

et une composante continue Sa$\phi$2 dont l'amplitude (Sa$\phi$2) est donnée par l'une quelconque des relations :

$$M(Sa\phi2) = k * (v^2 / r) \; et \; M(Sa\phi2) = k * (V^2 * r) / R^2$$

Le dispositif de l'invention peut être conçu pour exploiter l'une ou l'autre des composantes périodique et continue du signal de sortie Sa de l'accéléromètre, ces deux possibilités étant illustrées simultanément sur la figure 1.

En réalité, il est même possible de détecter la composante périodique et de l'utiliser pour procéder à une mesure en phase de la composante continue, cette approche n'étant cependant pas illustrée dans la mesure où sa plus grande complexité n'est compensée par aucun avantage qui puisse en l'occurrence la justifier de façon suffisante.

Dans le cas où le signal de sortie Sa de l'accéléromètre 40 est exploité par l'intermédiaire de sa composante périodique Sa$\phi$1, cette composante est produite par un filtre passe-haut 41 intégré au capteur de rotation 4 et relié à la sortie de l'accéléromètre 40.

Dans le cas où le signal de sortie Sa de l'accéléromètre 40 est exploité par l'intermédiaire de sa composante continue Sa$\phi$2, cette composante est produite par un filtre passe-bas 42 intégré au capteur de rotation 4 et relié à la sortie de l'accéléromètre 40.

Le capteur de rotation 4 comprend en outre un circuit de formatage 43 qui, quelle que soit la solution retenue, produit un signal de rotation de roue Sr à partir du signal filtré Sa$\phi$1 ou Sa$\phi$2 qu'il reçoit, ce signal étant génériquement noté Sa$\phi$.

Dans le cas où le circuit de mise en forme 43 reçoit la composante périodique Sa$\phi$1, ce circuit 43 a par exemple pour fonction de produire, en tant que signal de rotation de roue Sr, un signal représentant la fréquence ou la période de ce signal filtré Sa$\phi$1, c'est-à-dire F(Sa$\phi$1) ou 1/F(Sa$\phi$1).

En revanche, dans le cas où le circuit de mise en forme 43 reçoit la composante continue Sa$\phi$2, ce circuit 43 a par exemple pour fonction de produire, en tant que signal de rotation de roue Sr, un signal représentant l'amplitude du signal filtré Sa$\phi$2, c'est-à-dire M(Sa$\phi$2).

Les moyens de traitement 5 comprennent d'abord un premier générateur de fonction 51, dont la fonction est de délivrer, à partir du signal de rotation Sr, un signal de consigne de pression Kp lié au signal de rotation Sr par une loi Kp = f(Sr) qui croît avec la vitesse V du véhicule, c'est-à-dire encore avec F (Sa$\phi$1) et avec M(Sa$\phi$2).

Comme le sait en effet l'homme de l'art, la pression des pneus doit être d'autant plus importante que la vitesse du véhicule est élevée, de manière à pouvoir limiter les déformations que subissent les pneus par suite des sollicitations croissantes qui s'appliquent à eux.

Il est possible de prévoir que le premier générateur de fonction 51 calcule la vitesse V du véhicule à partir des valeurs connues des paramètres k, r, R, et du signal de rotation Sr représenté par les signaux F(Sa$\phi$1), 1/ F(Sa$\phi$1) ou M(Sa$\phi$2), et choisisse une valeur Kp de consigne de pression en fonction de cette vitesse V.

Il est néanmoins possible, et plus simple encore, de prévoir que le premier générateur de fonction 51 choisisse une valeur Kp de consigne de pression directement en fonction du signal de rotation Sr, c'est-à-dire directement en fonction des signaux F (Sa$\phi$1), 1/F(Sa$\phi$1) ou M(Sa$\phi$2), cette approche permettant d'éviter le calcul de la vitesse V du véhicule.

Ainsi, le premier générateur de fonction 51 peut par exemple comprendre au moins un premier comparateur propre à comparer le signal de rotation de roue Sr à un premier seuil Sr1 et à produire, en tant que signal de sortie Kp, un signal de valeur Kp1 ou de valeur Kp2 selon que le signal de rotation de roue Sr est au plus égal au premier seuil Sr1, ou qu'il lui est supérieur, la valeur Kp1 étant inférieure à la valeur Kp2 si le signal Sr est représenté par une fonction croissante de la vitesse V du véhicule, comme c'est le cas de F(Saφ1) et M(Saφ2), la valeur Kp1 étant en revanche supérieure à la valeur Kp2 si le signal Sr est représenté par une fonction décroissante de la vitesse V du véhicule, comme c'est le cas de 1/F(Saφ1).

Selon un premier mode de réalisation possible, le premier générateur de fonction 51 peut comprendre plusieurs comparateurs pour pouvoir comparer le signal de rotation de roue Sr à plusieurs seuils tels que Sr1 et pour produire corrélativement autant de valeurs du signal de consigne de pression Kp que d'états logiques susceptibles d'être pris par ces comparateurs.

Selon un second mode de réalisation possible, le premier générateur de fonction 51 peut comprendre un module de calcul propre à calculer la valeur du signal de consigne de pression Kp en fonction du signal de rotation de roue Sr et d'un algorithme préétabli.

Selon un troisième mode de réalisation possible, le premier générateur de fonction 51 peut comprendre une mémoire contenant au moins deux valeurs différentes Kp1 et Kp2 du signal de consigne de pression Kp, accessibles à des adresses différentes de la mémoire, et un circuit d'adressage qui utilise le signal de rotation de roue Sr en tant qu'adresse de lecture dans cette mémoire.

Comme le montre par ailleurs la figure 1, le dispositif de l'invention comprend un second générateur de fonction 52 qui reçoit à la fois le signal de consigne de pression Kp et le signal de pression Sp issu du capteur de pression 1, et qui produit en sortie un signal constituant le signal de surveillance Ss et représenté par une fonction h(Sp, Kp) des signaux Sp et Kp.

En pratique, il est avantageux de prévoir que le générateur de fonction 52 produise, en tant que signal de surveillance Ss, un signal lié à la différence Sp-Kp entre le signal de pression Sp et le signal de consigne de pression Kp.

Par exemple, le second générateur de fonction 52 peut produire, en tant que signal de surveillance Ss, un signal qui représente la différence Sp-Kp entre le signal de pression Sp et le signal de consigne de pression Kp, ou un signal qui ne représente que le signe de cette différence.

En outre, quelle que soit la façon dont est constitué le signal de surveillance Ss, il est possible de prévoir que ce signal ne soit émis que lorsque la différence Sp-Kp entre le signal de pression Sp et le signal de consigne de pression Kp est négative.

Le signal de surveillance Ss est émis en direction du récepteur 3 disposé sur le châssis du véhicule automobile, puis transmis au moins indirectement à un dispositif d'affichage 32.

Si le signal Ss est relativement élaboré et reflète par exemple la différence Sp-Kp à la fois en signe et en amplitude, ce signal peut être d'abord transmis à un circuit de pré-traitement 31, susceptible d'évaluer, notamment en fonction de la vitesse V du véhicule, la gravité de tout éventuel défaut de la pression d'un pneu et de piloter le dispositif d'affichage 32 de manière plus ou moins pressante selon le degré de gravité du défaut détecté.

## Revendications

1. Dispositif de surveillance de la pression d'un pneu équipant une roue d'un véhicule automobile, comprenant un capteur de pression (1) embarqué sur la roue et délivrant un signal de pression (Sp) représentatif de la pression du pneu, un circuit d'émission (2) également embarqué sur la roue et transmettant un signal de surveillance (Ss) lié à la pression du pneu, et un circuit de réception (3) installé sur une partie du véhicule portée par la roue, pour recevoir le signal de surveillance (Ss), en ce qu'il comprend des moyens de traitement (5) embarqués sur la roue pour rendre le signal de surveillance (Ss) au moins partiellement dépendant du signal de pression (Sp) et d'un signal de consigne de pression (Kp), en ce qu'il comprend en outre un capteur de rotation de la roue (4) embarqué sur la roue et produisant un signal de rotation de roue (Sr), et **caractérisé en ce que** les moyens de traitement (5) sont conçus pour rendre le signal de consigne de pression (Kp) au moins partiellement dépendant du signal de rotation de roue (Sr).

2. Dispositif de surveillance suivant la revendication 1, **caractérisé en ce que** le capteur de rotation (4) comprend un accéléromètre (40) présentant un axe sensible faisant un angle non nul avec une direction horizontale.

3. Dispositif de surveillance suivant l'une quelconque des revendications 1 ou 2, **caractérisé en ce que** les moyens de traitement (5) comprennent un premier générateur de fonction (51) délivrant, à partir du signal de rotation (Sr), un signal de consigne de pression (Kp) lié au signal de rotation (Sr) par une loi croissant avec la vitesse du véhicule, et un second générateur de fonction (52) produisant, en tant que signal de surveillance (Ss), un signal lié à une différence (Sp-Kp) entre le signal de pression (Sp) et le signal de consigne de pression (Kp).

4. Dispositif de surveillance suivant l'une quelconque des revendications précédentes combinée à la revendication 2, **caractérisé en ce que** le capteur de rotation (4) comprend un filtre passe-haut (41) relié à l'accéléromètre (40) et fournissant un signal filtré (Saφ1) sensiblement périodique.

5. Dispositif de surveillance suivant l'une quelconque des revendications précédentes combinée à la revendication 2, **caractérisé en ce que** le capteur de rotation (4) comprend un filtre passe-bas (42) relié à l'accéléromètre (40) et fournissant un signal filtré (Saφ2) sensiblement continu.

6. Dispositif de surveillance suivant l'une quelconque des revendications 4 et 5, **caractérisé en ce que** le capteur de rotation (4) comprend un circuit de formatage (43) produisant, en tant que signal de rotation de roue (Sr), un signal représentant la période, la fréquence, ou l'amplitude du signal filtré.

7. Dispositif de surveillance suivant les revendications 3 et 6, **caractérisé en ce que** le premier générateur de fonction (51) comprend un comparateur pour produire le signal de consigne de pression (Kp) en réponse à une comparaison entre le signal de rotation de roue (Sr) et au moins un seuil.

8. Dispositif de surveillance suivant les revendications 3 et 6, **caractérisé en ce que** le premier générateur de fonction (51) comprend une mémoire contenant au moins deux valeurs différentes du signal de consigne de pression (Kp), accessibles à des adresses différentes de la mémoire, et un circuit d'adressage utilisant le signal de rotation de roue (Sr) en tant qu'adresse de lecture dans la mémoire.

9. Dispositif de surveillance suivant l'une quelconque des revendications précédentes combinée à la revendication 3, **caractérisé en ce que** le second générateur de fonction (52) produit, en tant que signal de surveillance (Ss), un signal représentant au moins le signe de la différence (Sp-Kp) entre le signal de pression (Sp) et le signal de consigne de pression (Kp).

10. Dispositif de surveillance suivant la revendication 9, **caractérisé en ce que** le circuit d'émission (2) n'émet le signal de surveillance (Ss) que sous condition que la différence (Sp-Kp) entre le signal de pression (Sp) et le signal de consigne de pression (Kp) soit négative.

11. Dispositif de surveillance suivant l'une quelconque des revendications précédentes combinée à la revendication 3, **caractérisé en ce que** le signal de consigne de pression (Kp) prend une valeur choisie parmi au moins deux valeurs discrètes (Kp1, Kp2) différentes l'une de l'autre.

12. Procédé de surveillance de la pression d'un pneu équipant une roue d'un véhicule automobile, comprenant une première procédure de mesure mise en oeuvre sur la roue et consistant à délivrer un signal de pression (Sp) représentatif de la pression du pneu, une opération de transmission mise en oeuvre sur la roue et consistant à émettre un signal de surveillance (Ss) lié à la pression du pneu, et une opération de réception, mise en oeuvre sur une partie du véhicule portée par la roue, et consistant à recevoir le signal de surveillance (Ss), en ce qu'il comprend une procédure de traitement mise en oeuvre sur la roue et consistant à rendre le signal de surveillance (Ss) au moins partiellement dépendant du signal de pression (Sp) et d'un signal de consigne de pression (Kp), en ce qu'il comprend en outre une seconde procédure de mesure mise en oeuvre sur la roue et consistant à délivrer un signal de rotation de roue (Sr), et **caractérisé en ce que** la procédure de traitement est mise en oeuvre pour rendre le signal de consigne de pression (Kp) au moins partiellement dépendant du signal de rotation de roue (Sr).

13. Procédé de surveillance suivant la revendication 12, **caractérisé en ce que** la seconde procédure de mesure comprend une opération consistant à délivrer un signal (Sa) dépendant d'une accélération non nulle subie en un point de mesure de la roue.

14. Procédé de surveillance suivant l'une quelconque des revendications 12 et 13, **caractérisé en ce que** la procédure de traitement comprend une première étape de traitement consistant à délivrer, à partir du signal de rotation (Sr), un signal de consigne de pression (Kp) lié au signal de rotation (Sr) par une loi croissant avec la vitesse du véhicule, et une seconde étape de traitement consistant à délivrer, en tant que signal de surveillance (Ss), un signal lié à une différence (Sp-Kp) entre le signal de pression (Sp) et le signal de consigne de pression (Kp).

15. Procédé de surveillance suivant les revendications 13 et 14, **caractérisé en ce que** la seconde procédure de mesure comprend une opération de filtrage passe-haut effectuée sur le signal (Sa) dépendant de l'accélération du point de mesure, cette opération de filtrage passe-haut fournissant un signal filtré (Saφ1) sensiblement périodique, et **en ce que** la première étape de traitement comprend une opération de comparaison consistant à comparer la période ou la fréquence du signal filtré sensiblement périodique à au moins une période ou une fréquence de référence.

16. Procédé de surveillance suivant les revendications 13 et 14, **caractérisé en ce que** la seconde procédure de mesure comprend une opération de filtrage passe-bas effectuée sur le signal (Sa) dépendant de l'accélération du point de mesure, cette opération de filtrage passe-bas fournissant un signal filtré (Saφ2) sensiblement continu, et **en ce que** la première étape de traitement comprend une opération de comparaison consistant à comparer l'amplitude du signal filtré sensiblement continu à au moins une amplitude de référence.

17. Procédé de surveillance suivant l'une quelconque des revendications 12 à 16 combinée à la revendication 14, **caractérisé en ce que** la seconde étape de traitement consiste à délivrer, en tant que signal de surveillance (Ss), un signal représentant au moins le signe de la différence (Sp-Kp) entre le signal de pression (Sp) et le signal de consigne de pression (Kp), et **en ce que** l'opération de transmission n'est effectuée que pour autant que cette différence soit négative.

## Claims

1. Device for monitoring the pressure of a tyre fitted to a wheel of a motor vehicle, comprising a pressure sensor (1) fitted to the wheel and supplying a pressure signal (Sp) representative of the pressure of the tyre, a transmitter circuit (2) also fitted to the wheel and transmitting a monitoring signal (Ss) connected to the pressure of the tyre and a reception circuit (3) installed on a part of the vehicle carried by the tyre, to receive the monitoring signal (Ss), **characterised in that** it comprises means of processing (5) fitted to the wheel to make the monitoring signal (Ss) at least partly dependent on the pressure signal (Sp) and a pressure control signal (Kp), **in that** it also comprises a wheel rotation sensor (4) fitted to the wheel and producing a wheel rotation signal (Sr), and **characterised in that** the means of processing (5) are designed to make the pressure control signal (Kp) at least partly dependent on the wheel rotation signal (Sr).

2. Monitoring device according to claim 1, **characterised in that** the rotation sensor (4) comprises an accelerometer (40) with an axis substantially at a non-zero angle to a horizontal direction.

3. Monitoring device according to any one of claims 1 or 2, **characterised in that** the means of processing (5) comprise a first function generator (51) supplying, from the rotation signal (Sr), a pressure control signal (Kp) connected to the rotation signal (Sr) by a law increasing with the speed of the vehicle, and a second function generator (52) producing, as monitoring signal (Ss), a signal connected to a difference (Sp-Kp) between the pressure signal (Sp) and the pressure control signal (Kp).

4. Monitoring device according to any one of the previous claims combined with claim 2, **characterised in that** the rotation sensor (4) comprises a high pass filter (41) connected to the accelerometer (40) and supplying a substantially periodic filtered signal (Saφ1).

5. Monitoring device according to any one of the previous claims combined with claim 2, **characterised in that** the rotation sensor (4) comprises a low pass filter (42) connected to the accelerometer (40) and supplying a substantially continuous filtered signal (Saφ2).

6. Monitoring device according to any one of claims 4 and 5, **characterised in that** the rotation sensor (4) comprises a formatting circuit (43) producing, as wheel rotation signal (Sr), a signal representing the period, frequency or amplitude of the filtered signal.

7. Monitoring device according to claims 3 and 6, **characterised in that** the first function generator (51) comprises a comparator to produce the pressure control signal (Kp) in response to a comparison between the wheel rotation signal (Sr) and at least one threshold.

8. Monitoring device according to claims 3 to 6, **characterised in that** the first function generator (51) comprises a memory containing at least two different values of the pressure control signal (Kp), which are accessible at different addresses of the memory, and an addressing circuit using the wheel rotation signal (Sr) as address for reading the memory.

9. Monitoring device according to any one of the previous claims combined with claim 3, **characterised in that** the second function generator (52) produces, as monitoring signal (Ss), a signal representing at least the sign of the difference (Sp-Kp) between the pressure signal (Sp) and the pressure control signal (Kp).

10. Monitoring device according to claim 9, **characterised in that** the transmitter circuit (2) only transmits the monitoring signal (Ss) on condition that the difference (Sp-Kp) between the pressure signal (Sp) and the pressure control signal (Kp) is negative.

11. Monitoring device according to any one of the previous claims combined with claim 3, **characterised in that** the pressure control signal (Kp) takes a value chosen from at least two discrete values (Kp1, Kp2), which are different from each other.

12. Monitoring device for the pressure of a tyre fitted on a wheel of a motor vehicle, comprising a first measuring procedure used on the wheel and consisting of supplying a pressure signal (Sp) representative of the pressure of the tyre, a transmission operation used on the wheel and consisting of transmitting a monitoring signal (Ss) connected to the pressure of the tyre, and a reception operation used on a part of the vehicle carried by the wheel and consisting of receiving the monitoring signal (Ss), **characterised in that** it comprises a processing procedure used on the wheel and consisting of making the monitoring signal (Ss) at least partly dependant on the pressure signal (Sp) and a pressure control signal (Kp), **in that** it also comprises a second measuring procedure used on the wheel and consisting of supplying a wheel rotation signal (Sr), and **characterised in that** the processing procedure is used to make the pressure control signal (Kp) at least partly dependent on the wheel rotation signal (Sr).

13. Monitoring process according to claim 12, **characterised in that** the second measuring procedure comprises an operation consisting of supplying a signal (Sa) depending on a non-zero acceleration to which a measuring point of the wheel is subject.

14. Monitoring method according to any one of claims 12 and 13, **characterised in that** the processing procedure consists of a first processing stage consisting of supplying, from the rotation signal (Sr), a pressure control signal (Kp) connected to the rotation signal (Sr) by a law increasing with the speed of the vehicle, and a second processing stage consisting of supplying, as monitoring signal (Ss), a signal connected to a difference (Sp-Kp) between the pressure signal (Sp) and the pressure control signal (Kp).

15. Monitoring method according to claims 13 and 14, **characterised in that** the second measuring procedure comprises a high pass filtering operation carried out on the signal (Sa) depending on the acceleration of the measuring point, this high pass filtering operation supplying a substantially periodic filtered signal (Saφ1), and **in that** the first processing stage comprises a comparison operation consisting of comparing the period or frequency of the substantially periodic filtered signal with at least one reference period or frequency.

16. Monitoring method according to claims 13 an 14, **characterised in that** the second measuring procedure comprises a low pass filtering operation carried out on the signal (Sa) depending on the acceleration of the measuring point, this low pass filtering operation supplying a substantially continuous filtered signal (Saφ2), and **in that** the first processing stage comprises a comparison operation consisting of comparing the amplitude of the substantially continuous filtered signal with at least one reference amplitude.

17. Monitoring method according to any one of claims 12 to 16 combined with claim 14, **characterised in that** the second processing stage consists of supplying, as monitoring signal (Ss), a signal representing at least the sign of the difference (Sp-Kp) between the pressure signal (Sp) and the pressure control signal (Kp), and **in that** the transmission operation is only carried out if this difference is negative.

**Patentansprüche**

1. Vorrichtung zum Überwachen des Drucks eines Reifens eines Kraftfahrzeugrads, umfassend einen auf dem Rad angeordneten Druckfühler (1), der ein den Druck des Reifens darstellendes Drucksignal (Sp) liefert, einen ebenfalls auf dem Rad angeordneten Sendekreis (2), der ein mit dem Druck des Reifens verbundenes Überwachungssignal (Ss) überträgt, und einen Empfangskreis (3), der auf einem von dem Rad getragenen Teil des Fahrzeugs installiert ist, zum Empfang des Überwachungssignals (Ss), wobei sie auf dem Rad angeordneten Verarbeitungsmittel (5) umfasst, um das Überwachungssignal (Ss) mindestens teilweise von dem Drucksignal (Sp) und einem Drucksollwertsignal (Kp) abhängig zu machen, und außerdem einen auf dem Rad angeordneten Fühler (4) für die Drehung des Rads umfasst, der ein Raddrehungssignal (Sr) erzeugt, **dadurch gekennzeichnet, dass** die Verarbeitungsmittel (5) dafür ausgelegt sind, das Drucksollwertsignal (Kp) mindestens teilweise von dem Raddrehungssignal (Sr) abhängig zu machen.

2. Überwachungsvorrichtung nach Anspruch 1, **dadurch gekennzeichnet, dass** der Drehungsfühler (4) einen Beschleunigungsmesser (40) umfasst, der eine empfindliche Achse besitzt, die mit einer horizontalen Richtung einen Winkel von nicht null bildet.

3. Überwachungsvorrichtung nach einem der Ansprüche 1 oder 2, **dadurch gekennzeichnet, dass** die Verarbeitungsmittel (5) einen ersten Funktionserzeuger (51) umfassen, der ausgehend von dem Drehungssignal (Sr) ein Drucksollwertsignal (Kp) liefert, das mit dem Drehungssignal (Sr) durch eine mit der Geschwindigkeit des Fahrzeugs steigende Gesetzmäßigkeit verbunden ist, sowie einen zweiten Funktionserzeuger (52), der als Überwachungssignal (Ss) ein Signal erzeugt, das mit einer Differenz (Sp-Kp) zwischen dem Drucksignal (Sp) und dem Drucksollwertsignal (Kp) verbunden ist.

4. Überwachungsvorrichtung nach einem der vorhergehenden Ansprüche in Verbindung mit Anspruch 2, **dadurch gekennzeichnet, dass** der Drehungsfühler (4) ein Hochpassfilter (41) umfasst, das mit dem Beschleunigungsmesser (40) verbunden ist und ein im wesentlichen periodisches gefiltertes Signal (SaΦ1) liefert.

5. Überwachungsvorrichtung nach einem der vorhergehenden Ansprüche in Verbindung mit Anspruch 2, **dadurch gekennzeichnet, dass** der Drehungsfühler (4) ein Tiefpassfilter (42) umfasst, das mit dem Beschleunigungsmesser (40) verbunden ist und ein im Wesentlichen kontinuierliches gefiltertes Signal (SaΦ2) liefert.

6. Überwachungsvorrichtung nach einem der Ansprüche 4 und 5, **dadurch gekennzeichnet, dass** der Drehungsfühler (4) einen Formatierungskreis (43) umfasst, der als Raddrehungssignal (Sr) ein Signal erzeugt, das die Periode, die Frequenz oder die Amplitude des gefilterten Signals darstellt.

7. Überwachungsvorrichtung nach den Ansprüche 3 und 6, **dadurch gekennzeichnet, dass** der erste Funktionsgenerator (51) einen Vergleicher zum Erzeugen des Drucksollwertsignals (Kp) als Antwort auf einen Vergleich zwischen dem Raddrehungssignal (Sr) und mindestens einer Schwelle umfasst.

8. Überwachungsvorrichtung nach den Ansprüchen 3 und 6, **dadurch gekennzeichnet, dass** der erste Funktionsgenerator (51) einen Speicher umfasst, der mindestens zwei verschiedene Werte des Drucksollwertsignals (Kp) enthält, die an verschiedenen Adressen des Speichers zugänglich sind, sowie einen Adressierkreis, der das Raddrehungssignal (Sr) als Leseadresse im Speicher verwendet.

9. Überwachungsvorrichtung nach einem der vorhergehenden Ansprüche in Verbindung mit Anspruch 3, **dadurch gekennzeichnet, dass** der zweite Funktionsgenerator (52) als Überwachungssignal (Ss) ein Signal erzeugt, das mindestens das Vorzeichen der Differenz (Sp-Kp) zwischen dem Drucksignal (Sp) und dem Drucksollwertsignal (Kp) darstellt.

10. Überwachungsvorrichtung nach Anspruch 9, **dadurch gekennzeichnet, dass** der Sendekreis (2) das Überwachungssignal (Ss) nur unter der Bedingung sendet, dass die Differenz (Sp-Kp) zwischen dem Drucksignal (Sp) und dem Drucksollwertsignal (Kp) negativ ist.

11. Überwachungsvorrichtung nach einem der vorhergehenden Ansprüche in Verbindung mit Anspruch 3, **dadurch gekennzeichnet, dass** das Drucksollwertsignal (Kp) einen Wert annimmt, der aus mindestens zwei voneinander verschiedenen diskreten Werten (Kp1, Kp2) gewählt ist.

12. Verfahren zum Überwachen des Drucks eines Reifens eines Kraftfahrzeugrads, umfassend einen ersten an dem Rad vorgenommenen Messvorgang, der darin besteht, dass ein den Druck des Reifens darstellendes Drucksignal (Sp) geliefert wird, eine an dem Rad vorgenommene Übertragungsoperation, die darin besteht, dass ein mit dem Druck des Reifens verbundenes Überwachungssignal (Ss) gesendet wird, und eine Empfangsoperation, die an einem von dem Rad getragenen Teil des Fahrzeugs vorgenommen wird und darin besteht, dass das Überwachungssignal (Ss) empfangen wird, wobei es einen an dem Rad vorgenommenen Verarbeitungsschritt umfasst, der darin besteht, dass das Überwachungssignal (Ss) mindestens teilweise von dem Drucksignal (Sp) und von einem Drucksollwertsignal (Kp) abhängig gemacht wird, und ferner einen zweiten Messvorgang umfasst, der an dem Rad vorgenommen wird und darin besteht, dass ein Raddrehungssignal (Sr) geliefert wird, **dadurch gekennzeichnet, dass** der Verarbeitungsvorgang durchgeführt wird, um das Drucksollwertsignal (Kp) mindestens teilweise von dem Raddrehungssignal (Sr) abhängig zu machen.

13. Überwachungsverfahren nach Anspruch 12, **dadurch gekennzeichnet, dass** der zweite Messvorgang eine Operation umfasst, die darin besteht, dass ein Signal (Sa) geliefert wird, das von einer an einem Messpunkt des Rads auftretenden Beschleunigung von nicht null abhängig ist.

14. Überwachungsverfahren nach einem der Ansprüche 12 und 13, **dadurch gekennzeichnet, dass** der Verarbeitungsvorgang einen ersten Verarbeitungsschritt umfasst, der darin besteht, dass ausgehend von dem Drehungssignal (Sr) ein Drucksollwertsignal (Kp) geliefert wird, das mit dem Drehungssignal (Sr) durch eine mit der Geschwindigkeit des Fahrzeugs steigende Gesetzmäßigkeit verbunden ist, sowie einen zweiten Verarbeitungsschritt, der darin besteht, dass als Überwachungssignal (Ss) ein Signal geliefert wird, das mit einer Differenz (Sp-Kp) zwischen dem Drucksignal (Sp) und dem Drucksollwertsignal (Kp) verbunden ist.

15. Überwachungsverfahren nach den Ansprüche 13 und 14, **dadurch gekennzeichnet, dass** der zweite Messvorgang eine Hochpassfilterungsoperation umfasst, die an dem von der Beschleunigung des Messpunkts abhängigen Signal (Sa) vorgenommen wird und die ein im Wesentlichen periodisches gefiltertes Signal (SaΦ1) liefert, und dass der erste Verarbeitungsschritt eine Vergleichsoperation umfasst, die darin besteht, dass die Periode oder die Frequenz des im wesentlichen periodischen gefilterten Signals mit mindestens einer Bezugsperiode oder -frequenz verglichen wird.

16. Überwachungsverfahren nach den Ansprüche 13 und 14, **dadurch gekennzeichnet, dass** der zweite Messvorgang eine Tiefpassfilterungsoperation umfasst, die an dem von der Beschleunigung des Messpunkts abhängenden Signal (Sa) durchgeführt wird und die ein im Wesentlichen kontinuierliches gefiltertes Signal (SaF2) liefert, und dass der erste Verarbeitungsschritt eine Vergleichsoperation umfasst, die darin besteht, dass die Amplitude des im Wesentlichen kontinuierlichen gefilterten Signals mit mindestens einer Vergleichsamplitude verglichen wird.

17. Überwachungsverfahren nach einem der Ansprüche 12 bis 16 in Verbindung mit Anspruch 14, **dadurch gekennzeichnet, dass** der zweite Verarbeitungsschritt darin besteht, dass als Überwachungssignal (Ss) ein Signal geliefert wird, das mindestens das Vorzeichen der Differenz (Sp-Kp) zwischen dem Drucksignal (Sp) und dem Drucksollwertsignal (Kp) darstellt, und dass die Übertragungsfunktion nur durchgeführt wird, sofern diese Differenz negativ ist.

_Fig. 1_

_Fig. 2_